# FASCICULE DE BREVET EUROPEEN

(11) **EP 4 095 675 B1**
(45) Date de publication et mention de la délivrance du brevet: **01.10.2025**
(21) Numéro de dépôt: 22173828.9
(22) Date de dépôt: 17.05.2022
(51) Int. Cl.: G06F 7/58

(54) **PROCÉDÉ DE GÉNÉRATION DE NOMBRE ALÉATOIRES**
VERFAHREN ZUR ERZEUGUNG VON ZUFALLSZAHLEN
METHOD FOR GENERATING RANDOM NUMBERS

(30) Priorité: 28.05.2021 FR 2105603
(43) Date de publication de la demande: 30.11.2022
(73) Titulaire: SPINNION, 78600 Maisons-Laffitte (FR)
(72) Inventeur: SIMON, Peter Roger, 78600 Maisons-Laffitte (FR)
(74) Mandataire: Dupuis-Latour, Dominique

(56) Documents cités:
- US-A1- 2010 192 014
- US-A1- 2015 055 778
- MARTON KINGA ET AL: "Randomness Assessment of an Unpredictable Random Number Generator based on Hardware Performance Counters", ROMANIAN JOURNAL OF INFORMATION SCIENCE AND TECHNOLOGY, 1 January 2017 (2017-01-01), pages 136 - 160, XP055884913, Retrieved from the Internet <URL:http://www.romjist.ro/full-texts/paper556.pdf> [retrieved on 20220128]

## Description

### Domaine technique de l'invention

L'invention concerne la génération des nombres aléatoires.

De nombreuses techniques nécessitent de disposer de nombres aléatoires, tout particulièrement dans le domaine de la cryptographie lorsqu'il s'agit de mettre en œuvre des algorithmes de chiffrement de haute sécurité tels que AES, RSA, Diffie-Hellman, etc. Mais le recours à des tirages de nombres aléatoires intervient dans bien d'autres domaines, notamment les jeux de hasard, ou encore les techniques de modélisation probabilistes ou la sélection d'échantillons à des fins statistiques.

### État de la technique antérieure

Il existe de multiples manières de générer des nombres aléatoires, avec des niveaux d'entropie variables, l'entropie étant définie comme la mesure du degré effectif d'aléa (absence de caractère déterministe et de prévisibilité au tirage) de la valeur générée.

Dans certains cas, la génération de nombres "pseudo-aléatoires" peut suffire, c'est-à-dire de nombres qui sont obtenus par un procédé qui est déterministe, mais qui produit des valeurs suffisamment indépendantes les unes des autres pour satisfaire les besoins des applications considérées : par exemple les algorithmes de modélisation utilisant des techniques probabilistes, ou les méthodes d'échantillonnage à des fins statistiques.

En revanche, dans le cas notamment du chiffrement des données, il est essentiel que les séries de nombres aléatoires délivrées par le générateur ne présentent aucun lien décelable entre les nombres successifs, c'est-à-dire que les nombres produits soient absolument impossibles à prédire.

Les procédés de génération de nombres aléatoires (et non simplement pseudo-aléatoires) utilisés jusqu'à présent se basent principalement sur des phénomènes physiques, matériels (par exemple un bruit thermique ou électromagnétique) ou sur une interaction non prévisible avec un utilisateur, par exemple les mouvements erratiques d'une souris, qui ne sont ni cycliques ni déterministes.

Ces générateurs délivrent des nombres aléatoires avec une entropie très élevée mais ils présentent l'inconvénient d'être relativement complexes, car ils requièrent une circuiterie matérielle pour le recueil du phénomène physique ou de l'interaction avec l'utilisateur, des circuits convertisseurs analogique/numérique, un module algorithmique de génération de la valeur numérique aléatoire, etc.

De plus, ils sont mal adaptés à la génération de nombres aléatoires de très grande dimension (plusieurs dizaines ou centaines de bits), si ce n'est au prix d'un temps de réponse excessivement long entre la requête d'obtention du nombre aléatoire et la délivrance effective du résultat par le générateur.

Or les applications les plus récentes de chiffrement de haute sécurité nécessitent la génération très rapide de nombres aléatoires longs et présentant une entropie élevée.

L'article de Marton K et al. "Randomness Assessment of an Unpredictable Random Number Generator based on hardware Performance Counters", Romanian Journal of Information Science and Technology, Vol. 20, No. 2, 2017, 136-160, propose une technique de génération de nombres (pseudo-)aléatoires consistant à échantillonner le contenu de l'un (ou de plusieurs) des compteur(s) de performance matérielle d'un processeur et à utiliser le résultat du prélèvement en tant que source de valeur aléatoire non prédictible.

Les compteurs de performance matérielle sont des registres dédiés présents dans les microprocesseurs récents, servant à la surveillance des performances (*performance monitoring*) du processeur en cours de fonctionnement. Ces compteurs comptent des évènements (au sens informatique du terme) en relation avec l'activité du processeur : accès cache réussis ou manqués, progression du pipeline d'instructions, etc. ou encore durées pendant lesquelles une condition donnée reste 'vraie', par comptage du nombre de cycles CPU écoulés jusqu'à ce que cette condition change.

Le caractère hautement imprévisible de l'évolution de ces compteurs, liés à des états multiples et très changeants du fonctionnement du processeur, induit une entropie élevée permettant la génération de séquences de nombre aléatoires. En d'autres termes, le caractère aléatoire du contenu des registres est imputé à l'entropie du système et à la multitude des processus et threads exécutés simultanément.

Cette technique n'est toutefois pas à l'abri de phénomènes tels que : évolutions cycliques des états du processeur, séquences de fonctionnement répétitives, itérations, etc. Pour pallier ce risque, l'article précité de Marton et al. décrit la manière d'opérer une "calibration" du générateur de nombres aléatoires par un *"randomness assessment"* des séquences produites pour divers paramétrages du générateur, permettant de sélectionner les configurations qui procurent la meilleure entropie.

Par conséquent, la mise en œuvre de cette technique impose une calibration du générateur pour réduire l'effet de tous les biais de fonctionnement potentiels, et assurer que la génération des nombres (pseudo-)aléatoires se fera avec le niveau d'entropie souhaité.

Le but de l'invention est de remédier à ces difficultés et limitations, en proposant une technique de génération de nombres aléatoires offrant, simultanément :
- une très grande simplicité de réalisation, sans recours à aucune circuiterie matérielle ;
- l'absence de tout biais potentiel dans la génération des nombres aléatoires, ceux-ci ne présentant entre eux aucun lien déterministe ;
- la garantie immédiate d'un fonctionnement optimal avec une entropie maximale, sans aucun recours à une calibration préalable ;
- la possibilité de délivrer à une cadence très élevée des nombres aléatoires aussi longs que souhaité ; et
- la possibilité, dans certaines mises en œuvre, de faire dépendre le fonctionnement propre du générateur aléatoire d'un paramètre de niveau supérieur, lui-même modifié de manière aléatoire à chaque itération du processus, c'est-à-dire avec un double degré d'aléa pour chaque nombre obtenu.

### Exposé de l'invention

L'idée de base de l'invention réside dans l'utilisation comme source d'un registre dont le contenu change de façon *a priori* totalement déterministe et prédictible, et de reporter le caractère aléatoire de l'opération de génération du nombre aléatoire sur le moment où ce registre sera lu.

Plus précisément, l'invention propose d'utiliser comme registre source le registre d'horodatage qui compte les impulsions de l'horloge de séquencement du processeur, situé en aval de l'oscillateur à quartz du processeur et qui évolue donc, intrinsèquement, de façon purement déterministe au cours du temps, ceci sans aucun biais potentiel tel que ceux qui ont été exposés plus haut.

En particulier, le contenu de ce registre d'horodatage n'est pas soumis aux mêmes variations que les cycles CPU, dont la cadence de répétition peut varier notamment selon le mode de fonctionnement du CPU : mode *"overclocking"* ou "turbo" où la fréquence est accrue, ou inversement mode *"underclocking"* où la fréquence est réduite à des fins d'économie d'énergie ou de mise en hibernation de l'ordinateur.

À l'opposé, le comptage des impulsions de l'horloge de séquencement du processeur, c'est-à-dire des battements ou *"ticks"* de l'oscillateur, est une fonction invariante et parfaitement déterminable, ne dépendant de rien d'autre que du temps qui passe. Ce comptage alimente un registre par une valeur à très faible entropie, en évolution constante et linéaire, non aléatoire et indépendante de l'état du système ou du nombre de processus ou *threads* en exécution, de sorte que des lectures successives du registre ne fourniraient que des variations linéaires incrémentales.

L'invention propose d'utiliser cette source intrinsèquement déterministe (le comptage des impulsions de l'horloge) - donc à l'abri de tout biais potentiel - pour générer un nombre aléatoire, l'aléa résidant uniquement dans le caractère non déterministe du moment de la lecture du compteur (plus précisément du ou des dernier bits de celui-ci). Il est en effet impossible de déterminer ce moment à l'avance de fait de la multitude de tâches, *threads* et événements exécutés par le système de façon concomitante.

En d'autres termes, ce n'est pas le contenu du registre qui rend aléatoire le résultat de la lecture du registre, mais l'indéterminisme du moment de cette lecture.

À cette fin l'invention propose, plus précisément, un procédé de génération d'un nombre aléatoire mis en œuvre au moyen d'un processeur numérique, comprenant : a) l'interrogation d'un registre interne d'horodatage comptant des impulsions d'une horloge de séquencement du processeur ; b) l'extraction à un instant donné de *n* bits des bits de poids le plus faible du registre, n ≥ 1 ; c) l'utilisation des n bits extraits à l'étape b) en tant que bit(s) constitutif(s) d'un nombre aléatoire de N bits (34) à générer ; d) la réitération des étapes a) à c) jusqu'à obtention des N bits du nombre aléatoire ; et e) la délivrance du nombre aléatoire à un circuit ou logiciel applicatifs.

Selon diverses formes de mise en œuvre subsidiaires avantageuses :
- le registre d'horodatage (30) est un registre comptant des impulsions directement issues d'un oscillateur (26) de l'horloge ;
- les étapes a) à d) sont exécutées au sein d'un micrologiciel du processeur ;
- les *n* bits extraits à l'étape b) sont le(s) bit(s) de poids le plus faible du registre d'horodatage ;
- *n* = 1 et le bit extrait à l'étape b) est le bit de poids le plus faible du registre d'horodatage ;
- l'instant donné d'extraction des n bits à l'étape b) est un instant commandé par un générateur aléatoire ou pseudo-aléatoire ; et/ou
- l'instant donné d'extraction des n bits à l'étape b) est un instant déterminé en réponse à une requête reçue du circuit ou logiciel applicatifs.

### Brève description des dessins

On va maintenant exposer des exemples de mise en œuvre de l'invention, en référence aux dessins annexés où les mêmes références désignent d'une figure à l'autre des éléments identiques ou fonctionnellement semblables.
La Figure 1 illustre de façon schématique un processeur numérique avec les divers blocs auxquels il est interfacé, l'ensemble étant utilisé pour la mise en œuvre du procédé de l'invention.
La Figure 2 explicite la manière de générer un nombre aléatoire par interrogation d'un registre du système de la Figure 1.
La Figure 3 est un organigramme présentant les étapes successives de mise en œuvre du procédé de l'invention.

### Description détaillée de l'invention

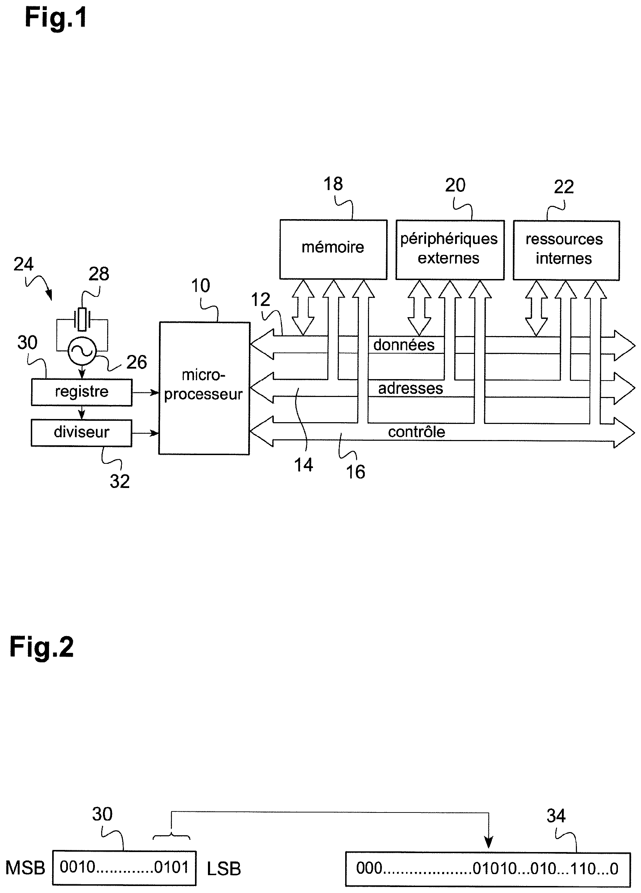

La Figure 1 représente de façon schématique une architecture d'un système à processeur numérique, en elle-même conventionnelle.

Un microprocesseur ou microcalculateur 10 est interfacé par des bus de données 12, d'adresses 14 et de contrôle 16 respectivement à des circuits de mémoire 18, à des périphériques externes 20 et à des ressources internes 22.

Le séquencement général du processeur 10 est assuré par un circuit d'horloge 24 comprenant un oscillateur 26 piloté par un quartz 28. Les périodes de l'oscillateur 26 alimentent un registre d'horodatage 30 comptant les impulsions qui serviront à définir la cadence des cycles CPU successifs du processeur 10-après réduction de la fréquence par un diviseur 32. Le contenu du registre d'horodatage 30 est un contenu évolutif, variant en permanence au rythme des impulsions de l'horloge de séquencement 24.

Le principe de l'invention, schématisé Figure 2, consiste à lire un ou plusieurs bits (*n* bits, avec *n* ≥ 1) du registre d'horodatage 30, et utiliser ces *n* bits pour constituer les *N* bits d'un nombre aléatoire 34 de *N* bits (*N* ≥ *n*).

Si *n* < *N,* le processus est réitéré jusqu'à complétion des *N* bits du nombre 34.

Il est possible d'extraire, indifféremment, par exemple un bit à la fois (*n* = 1), un demi-octet (*n* = 4), un octet (*n* = 8), etc., pour obtenir les *N* bits du nombre aléatoire 34, sans limitation spécifique sur le nombre *N*, et donc sur la longueur du nombre aléatoire obtenu.

Toutefois, pour maximiser l'entropie du processus, on préfère n'extraire qu'un seul bit (*n =* 1), plus précisément le bit de poids le plus faible du registre.

Dans la plupart des microprocesseurs, le registre d'horodatage (*timestamp*) est un registre accessible et interrogeable. Par exemple, dans les processeurs Intel (marque déposée) ce registre d'horodatage est un registre de 64 bits dénommé TSC (*TimeStamp Counter*)*,* et il peut être interrogé par une instruction de bas niveau RDTCP (*Read TSC and Processor ID*)*.* Ce compteur reflète le nombre d'impulsions produites par l'horloge de séquencement depuis la remise à zéro initiale du registre.

Le ou les bits extraits sont les bits de poids le plus faible (LSB) du registre d'horodatage, qui sont des bits dont la valeur est déterministe mais totalement imprévisible à un instant donné compte tenu des fréquences d'horloge très élevées des processeurs actuels, typiquement de plusieurs gigahertz, c'est-à-dire qu'à chaque nanoseconde les derniers bits du registre d'horodatage sont plusieurs fois modifiés.

Or l'instant d'exécution de l'instruction d'interrogation du registre est lui-même sujet à un aléa imprévisible, ce qui crée l'aléa sur la valeur du ou des bits lus lorsque cette interrogation est effectivement exécutée. En effet, l'architecture des microcalculateurs au niveau matériel induit des irrégularités au niveau du séquencement de l'exécution des micro-instructions du fait des interruptions matérielles (événements externes qui déclenchent l'exécution de logiciels spécifiques et qui interrompent l'exécution d'autres logiciels de façon impérative), mais aussi en raison de la coordination nécessaire de plusieurs cœurs qui exécutent des tâches en parallèle.

Au surplus, au-dessus de la couche matérielle s'ajoutent plusieurs couches logicielles qui s'exécutent elles-mêmes avec des niveaux de priorité différents et en compétition permanente avec des événements externes et d'autres logiciels s'exécutant concomitamment.

Il est donc impossible de prédire à quel moment sera effectivement exécutée telle ou telle micro-instruction d'un logiciel applicatif et, par voie de conséquence, de déterminer par anticipation la valeur des bits du registre d'horodatage à ce moment-là, tout particulièrement celle des bits de poids le plus faible, au moment où l'instruction de lecture du registre sera effectivement exécutée.

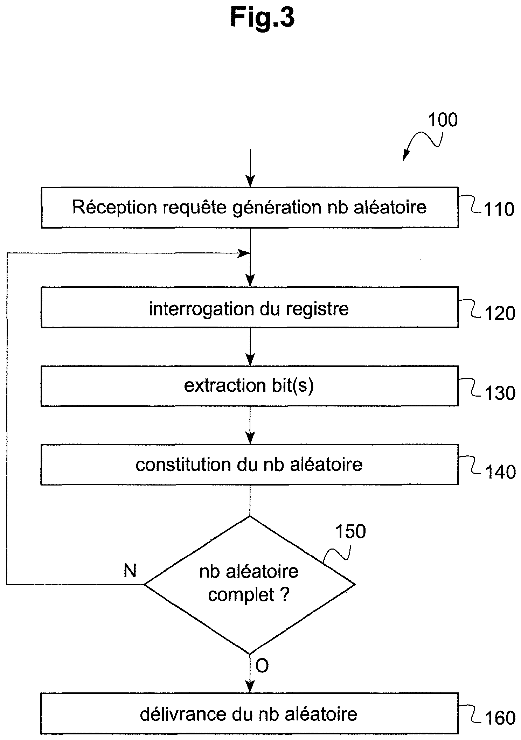

La Figure 3 présente un organigramme 100 illustrant de façon schématique les étapes successives du procédé permettant d'obtenir le nombre aléatoire 34 à la suite de la réception (bloc 110) d'une requête de génération d'un nombre aléatoire :
a) interrogation du registre d'horodatage 30 (bloc 120) ;
b) extraction du ou des n bits du registre (bloc 130) ;
c) utilisation de ce ou ces bits pour constituer le nombre aléatoire (bloc 140) ;
d) si le nombre aléatoire n'est pas complet (test 150), réitération des étapes 120 à 130 ; et enfin
e) délivrance du nombre aléatoire (bloc 160) en tant que réponse à la requête reçue à l'étape 110.

On soulignera que le procédé que l'on vient de décrire présente plusieurs avantages particulièrement significatifs :
- aucun ajout d'élément matériel aux circuits préexistants du processeur numérique, puisque qu'aucune interaction avec l'extérieur (pour utiliser un phénomène physique) ou avec l'utilisateur n'est nécessaire ;
- mise en œuvre simple et universelle, le registre d'horodatage existant sur tous les processeurs numériques ;
- très haut degré d'entropie ; et
- possibilité d'obtenir des nombres aléatoires très longs en un temps très court.

En pratique, le procédé de génération peut être mis en œuvre à plusieurs niveaux :
- entièrement et directement au sein du micrologiciel (*firmware*) du processeur ;
- à partir de ce micrologiciel pour alimenter une couche logicielle applicative de niveau supérieur, donc du processeur vers la couche applicative (ce qui évite les difficultés dues aux protections d'accès au microprocesseur, puisque dans ce cas c'est ce dernier qui génère en interne et délivre le nombre aléatoire) ; ou
- inversement, de la couche applicative vers le processeur, sur requête de l'application. Une application de haut niveau (*User Mode*) n'ayant généralement pas les privilèges pour accéder directement aux registres du processeur, l'implémentation peut être réalisée à deux niveaux avec i) un module s'exécutant à un niveau de privilège élevé pour accéder aux registres du processeur et ii) un second module communiquant avec le premier et interfacé au programme de haut niveau par une API appropriée.

La forme de réalisation que l'on a décrit ci-dessus, par extractions répétées de *n* bits du registre d'horodatage et concaténation des n bits successifs jusqu'à obtenir les N bits du nombre aléatoire, peut faire l'objet de nombreuses variantes.

Ces variantes, qui permettent en particulier d'augmenter encore le degré d'entropie du nombre aléatoire généré, ne sont pas exclusives et peuvent être combinées entre elles.

Une *première variante* consiste à commander la délivrance de la commande d'instruction de lecture du registre sous le contrôle d'un générateur pseudo-aléatoire inclus dans le logiciel interne du processeur, qui introduit entre chaque lecture du registre un délai d'attente imprévisible.

Une *deuxième variante* consiste à faire varier le nombre n et/ou l'ordre des bits extraits du registre interrogé, également de façon aléatoire ou pseudo-aléatoire, à chaque étape d'interrogation. En d'autres termes, la valeur n est dans ce cas elle-même aléatoire au lieu d'être prédéfinie, de même que l'ordre dans lequel les *n* bits (si plus d'un bit) sont utilisés pour constituer le nombre aléatoire.

Une *troisième variante* consiste, au lieu de simplement copier les *n* bits extraits pour constituer les N bits du nombre aléatoire, à utiliser ces n bits en les modifiant, par exemple en les inversant ou en les permutant selon un processus aléatoire ou pseudo-aléatoire, en les sommant tous ou en sommant certains d'entre eux, etc.

## Revendications

1. Un procédé de génération d'un nombre aléatoire mis en œuvre au moyen d'un processeur numérique (10), **caractérisé en ce qu'**il comprend :
a) l'interrogation (120) d'un registre interne d'horodatage (30) comptant de manière intrinsèquement déterministe et prédictible des impulsions d'une horloge (24) de séquencement du processeur ;
b) l'extraction (130), à un instant donné imprédictible, de *n* bits des bits de poids le plus faible du registre, *n* ≥ 1 ;
c) l'utilisation (140) des n bits extraits à l'étape b) en tant que bit(s) constitutif(s) d'un nombre aléatoire de N bits (34) à générer ;
d) la réitération des étapes a) à c) jusqu'à obtention des N bits du nombre aléatoire ; et
e) la délivrance (160) du nombre aléatoire à un circuit ou logiciel applicatifs.

2. Le procédé de la revendication 1, dans lequel le registre d'horodatage (30) est un registre comptant des impulsions directement issues d'un oscillateur (26) de l'horloge (24).

3. Le procédé de la revendication 1, dans lequel les étapes a) à d) sont exécutées au sein d'un micrologiciel du processeur.

4. Le procédé de la revendication 1, dans lequel les *n* bits extraits à l'étape b) sont le(s) bit(s) de poids le plus faible du registre d'horodatage.

5. Le procédé de la revendication 4, dans lequel *n* = 1 et le bit extrait à l'étape b) est le bit de poids le plus faible du registre d'horodatage.

6. Le procédé de la revendication 1, dans lequel l'instant donné d'extraction des *n* bits à l'étape b) est un instant commandé par un générateur aléatoire ou pseudo-aléatoire.

7. Le procédé de la revendication 1, dans lequel l'instant donné d'extraction des *n* bits à l'étape b) est un instant déterminé en réponse à une requête reçue du circuit ou logiciel applicatifs.

## Patentansprüche

1. Ein Verfahren zur Erzeugung einer Zufallszahl, das mittels eines digitalen Prozessors (10) durchgeführt wird, **dadurch gekennzeichnet, dass** es Folgendes umfasst:
a) Abrufen (120) eines internen Zeitgeberregisters (30), das auf intrinsisch deterministische und vorhersehbare Weise Impulse eines Sequenzzeitgebers (24) des Prozessors zählt;
b) Extrahieren (130), zu einem unvorhersehbaren bestimmten Zeitpunkt, von n Bits der Bits mit dem geringsten Gewicht des Registers, *n* ≥ 1;
c) Verwenden (140) der in Schritt b) extrahierten *n* Bits als Bit(s), das/die Bestandteil einer Zufallszahl von *N* Bits (34) ist/sind, die erzeugt werden sollen;
d) Wiederholen der Schritte a) bis c) bis zum Erhalt der *N* Bits der Zufallszahl; und
e) Ausgeben (160) der Zufallszahl an eine Anwendungsschaltung oder -software.

2. Das Verfahren nach Anspruch 1, wobei das interne Zeitgeberregister (30) ein Register ist, das die Impulse zählt, die unmittelbar von einem Oszillator (126) des Zeitgebers (24) stammen.

3. Das Verfahren nach Anspruch 1, wobei die Schritte a) bis d) innerhalb einer Firmware des Prozessors ausgeführt werden.

4. Das Verfahren nach Anspruch 1, wobei die in Schritt b) extrahierten *n* Bits das/die Bit(s) mit dem geringsten Gewicht des Zeitgeberregisters sind.

5. Das Verfahren nach Anspruch 4, wobei *n* = 1 und das in Schritt b) extrahierte Bit das Bit mit dem geringsten Gewicht des Zeitgeberregisters ist.

6. Das Verfahren nach Anspruch 1, wobei der bestimmte Zeitpunkt des Extrahierens der n Bits in Schritt b) ein Zeitpunkt ist, der durch einen Zufallsgenerator oder Pseudozufallsgenerator gesteuert wird.

7. Das Verfahren nach Anspruch 1, wobei der bestimmte Zeitpunkt des Extrahierens der n Bits in Schritt b) ein Zeitpunkt ist, der in Reaktion auf eine von der Anwendungsschaltung oder -software empfangene Anforderung bestimmt wird.

## Claims

1. A random number generation method implemented by means of a digital processor (10), **characterized by** comprising:
a) searching (120) an internal timestamp register (30) which counts, in an intrinsically deterministic an predictable manner, pulses from a clock (24) for sequencing the processor;
b) extracting (130), at an unpredictable given time, *n* bits from the least significant bits of the register, *n* ≥ 1;
c) using (140) the *n* bits extracted at step b) as constituent bit(s) of a random number of *N* bits (34) to be generated;
d) reiterating steps a) to c) until obtaining the *N* bits of the random number; and
e) providing (160) the random number to an application circuit or software.

2. The method of claim 1, wherein the timestamp register (30) is a register counting pulses directly outputted from an oscillator (26) of the clock (24).

3. The method of claim 1, wherein steps a) to d) are carried out within a firmware of the processor.

4. The method of claim 1, wherein the *n* bits extracted at step b) are the least significant bit(s) of the timestamp register.

5. The method of claim 4, wherein *n =* 1 and the bit extracted at step b) is the least significant bit of the timestamp register.

6. The method of claim 1, wherein the given time of extraction of the *n* bits at step b) is a time controlled by a random or pseudo-random generator.

7. The method of claim 1, wherein the given time of extraction of the n bits at step b) is a time determined in response to a request received from the application circuit or software.
